# EUROPÄISCHE PATENTSCHRIFT

(11) **EP 2 679 328 B1**
(45) Veröffentlichungstag und Bekanntmachung des Hinweises auf die Patenterteilung: **08.08.2018**
(21) Anmeldenummer: 13173481.6
(22) Anmeldetag: 25.06.2013
(51) Int. Cl.: B23K 11/11, B23K 11/00, B23K 11/10, B23K 11/14, B23K 11/18, B23K 11/20, B23K 20/10, B23K 20/12, B23K 20/16, B23K 28/02

(54) **Fügen von zwei Fügepartnern mittels einer Kombination eines elektrischen Widerstandsschweißens und eines Reibschweißens**
Joining of two parts by means of a combination of electrical resistance welding and friction welding
Assemblage de deux partenaires d'assemblage au moyen d'une combinaison d'un soudage par résistance et d'un soudage par friction

(30) Priorität: 29.06.2012 DE 102012013014
(43) Veröffentlichungstag der Anmeldung: 01.01.2014
(73) Patentinhaber: Volkswagen AG, 38436 Wolfsburg (DE)
(72) Erfinder: Rudolf, Heiko, 38556 Bokensdorf (DE); Broda, Tobias, 06268 Obhausen (DE)

(56) Entgegenhaltungen:
- WO-A1-2011/162345
- DE-A1- 4 444 461
- DE-A1-102009 042 973
- JP-A- H05 337 639
- US-A1- 2009 294 411

## Beschreibung

Die Erfindung betrifft ein Verfahren zum Fügen eines ersten Fügepartners mit einem zweiten Fügepartner mittels eines elektrischen Widerstandsschweißens sowie eine verfahrensgemäße dauerhafte Verbindung zwischen den zwei Fügepartnern.

Das Fügen von Fügepartnern mittels Schweißen ist bekannt. Durch das Erzeugen von Wärme kann zumindest einer der Fügepartner bereichsweise aufgeschmolzen werden, so dass eine dauerhafte Verbindung der Fügepartner entsteht. Unter der Bezeichnung Widerstandsschweißen sind Verfahren bekannt, bei denen die Wärme zum Aufschmelzen der Fügepartner mittels eines elektrischen Stromaufflusses erzeugt wird. Außerdem sind unter der Bezeichnung Reibschweißen Verfahren bekannt, bei denen die erforderliche Wärme mittels Reibung erzeugt wird. Ferner ist es bekannt, Fügehilfsmittel zu verwenden, insbesondere solche Fügehilfsmittel, die zum Erzeugen der dauerhaften Schweißverbindung ebenfalls mit aufgeschmolzen werden. Davon abgegrenzt sind Lötverfahren bekannt, bei denen die Fügepartner selbst nicht aufgeschmolzen werden, jedoch zwischen diesen ein verflüssigtes Lot eingebracht wird, das nach einem Erstarren in einem zwischen den Fügepartnern verbleibenden Fügespalt verbleibt und zwischen den Fügepartnern entsprechende Bindekräfte überträgt. Die DE 102 51 414 A1 betrifft ein Verfahren zum Punktschweißen oder Löten durch Widerstands- oder Induktiverwärmung von durch metallische Werkstoffe gebildeten Bauelementen, insbesondere Blechbauteilen, sowie ein zur Durchführung des Verfahrens bestimmtes Fügehilfselement. Die zum Punktschweißen erforderliche Wärmeeinleitung wird dabei durch eine gesteuerte Veränderung der Stromstärke und der Fügekraft in Abhängigkeit von der Querschnittskontur des zwischen den zu schweißenden oder zu lötenden Bauelementen eingesetzten Fügehilfselements bestimmt. Das Fügehilfselement ist insbesondere Ringförmig und zwischen den Blechbauteilen eingeschlossen.

Die DE 44 44 461 A1 betrifft ein kombiniertes Ultraschall und Widerstandspressschweißverfahren zum Verschweißen von Blechen aus Aluminium. Durch die Kombination von Ultraschallschweißen und elektrischem Widerstandspressschweißen wird eine bei dem Schweißen störende Oxidschicht zerstört und zerkleinert.

Die DE 10 2007 036 416 A1 betrifft ein Hilfsfügeteil aus Stahl zum Verbinden eines Aluminiumblechs mit einem Stahlteil durch Widerstandsschweißen, einem Schaft, der durch das Aluminiumblech hindurchführbar ist und an seinem freien Ende mit dem Stahlteil verschweißbar ist, und mit einem dem Schaft radial überragenden Kopf, der im montierten Zustand an einer vom Stahlteil abgewandten Seite am Aluminiumblech anliegt und an dem eine Schweißelektrode anlegbar ist. Der Schaft weist eine Spitze auf, mit welcher er durch das Aluminiumblech durchschlagbar oder durchdrückbar ist. Die DE 10 2006 056 489 A1 betrifft ein Verfahren zum Verbinden eines Stahlbauteils mit einem Aluminiumbauteil mit folgenden Schritten: Bereitstellen des Stahlbauteils, Aufbringen einer Aluminiumschicht auf das Stahlbauteil durch Aufspritzen von Aluminiumpartikeln auf das Stahlbauteil und Verschweißen des Aluminiumbauteils mit der Aluminiumschicht durch ein Schmelzschweißverfahren. Es werden feine Aluminiumpartikel mit sehr hoher Geschwindigkeit auf das Stahlbauteil aufgespritzt. Aufgrund der hohen genetischen Energie der Aluminiumpartikel verschweißen diese mit dem Stahlbauteil, sowie untereinander, wodurch sich eine fest anhaftende Aluminiumschicht ergibt. Anschließend wird das Aluminiumbauteil mittels des Schmelzschweißverfahrens mit der Aluminiumschicht verschweißt. Die DE 10 2009 000 892 A1 betrifft ein Verfahren zur Schaffung einer Beschichtung und/oder Lötverbindung mittels folienförmiger Werkstoffe ohne Einsatz von Flussmitteln: Ein folienförmiger Lötwerkstoff wird mittels eines Ultraschallpressschweißverfahrens auf eine oder beide Oberflächen der zu fügenden Bauteile aufgetragen. Die beloteten Bauteile werden mit den beloteten Flächen oder, sofern nur eine Fläche belotet wurde mit der beloteten Fläche und der Fügefläche des anzubindenden Fügepartners gegeneinander positioniert durch Zufuhr von Wärme verlötet, insbesondere durch einen Widerstands- oder Induktionsprozess, einen Laser-, Elektronenstrahl oder einen Lichtbogenprozess.

Aufgabe der Erfindung ist es, eine alternative Möglichkeit zum Fügen eines ersten Fügepartners mit einem zweiten Fügepartner unter Verwendung eines Fügehilfsmittels und einem Schweißprozess anzugeben, insbesondere eine Möglichkeit zu schaffen, unterschiedliche Fügepartner zu fügen, insbesondere unterschiedliche Fügepartner, bei denen zumindest einer eine Oxidschicht aufweist.

Die Aufgabe ist durch ein Verfahren zum Fügen eines ersten Fügepartners mit einem zweiten Fügepartner mittels eines elektrischen Widerstandsschweißens, mit Fügen einer Schweißeinlage mit dem ersten Fügepartner mittels eines Reibschweißens, Erzeugen eines elektrischen Stromflusses über den zweiten Fügepartner in die Schweißeinlage und durch Fügen der Schweißeinlage mit dem zweiten Fügepartner mittels des Widerstandsschweißens gelöst. Somit wird die Schweißeinlage mittels des Reibschweißens mit dem ersten Fügepartner verbunden werden. Dies kann unter Ausnutzung der Vorteile des Reibschweißens erfolgen, insbesondere kann dabei ein Aktivieren und oder ein Aufbrechen einer Oberfläche des ersten Fügepartners erfolgen. Die Schweißeinlage wird anschließend mittels des elektrischen Widerstandsschweißens mit dem zweiten Fügepartner gefügt. Vorteilhaft ist es dadurch möglich, Fügepartner mit unterschiedlichsten Materialien und/oder Oberflächen über die Schweißeinlage zu verbinden. Somit erfolgt das endgültige Fügen mittels zwei unterschiedlichen Schweißverfahren und über die Schweißeinlage. Die Schweißeinlage kann dabei vorteilhaft so gewählt werden, dass diese hinsichtlich des entsprechenden Schweißverfahrens und dem entsprechenden Fügepartner eine gute Verschweißbarkeit gewährleistet. Vorteilhaft kann mit Hilfe der Schweißeinlage ein eigentlich zum elektrischen Widerstandsschweißen tendenziell eher ungeeigneter Fügepartner auf herkömmliche Art und Weise mittels des elektrischen Widerstandsschweißens mit einem widerstandsschweißgeeigneten Fügepartner verbunden werden.

Eine Ausführungsform des Verfahrens wird gemäß Anspruch 2 durchgeführt. Vorteilhaft kann die Oxidschicht durchbrochen werden, wodurch sich vorteilhaft eine Schweißbarkeit des ersten Fügepartners mit der Schweißeinlage verbessert.

Eine weitere bevorzugte Ausführungsform des Verfahrens wird gemäß Anspruch 3 durchgeführt. Vorteilhaft können die Fügepartner trotz der unterschiedlichen Werkstoffe über die Schweißeinlage dauerhaft miteinander verbunden werden.

Eine weitere Ausführungsform des Verfahrens wird gemäß Anspruch 4 durchgeführt. Vorteilhaft können alle Metallwerkstoffe, insbesondere Aluminium-, Magnesium-, Titan- und/oder Kupferwerkstoffe gefügt werden.

Eine weitere Ausführungsform des Verfahrens wird gemäß Anspruch 5 durchgeführt. Vorteilhaft ist die Schweißeinlage derartig angepasst, dass diese mit dem Stahlwerkstoff des zweiten Fügepartners verschweißbar ist. Vorteilhaft kann dazu die Schweißeinlage an das Widerstandsschweißen mit dem Stahlwerkstoff angepasst sein, insbesondere einen Stahlwerkstoff aufweisen. Vorteilhaft kann so mittels der Schweißeinlage eine dauerhafte Verbindung zwischen den Fügepartnern hergestellt werden, insbesondere trotz unterschiedlicher Werkstoffe. Insbesondere kann eine vorteilhafte Verbindung zwischen dem Aluminiumwerkstoff und dem Stahlwerkstoff erfolgen.

Eine weitere Ausführungsform des Verfahrens wird gemäß Anspruch 6 durchgeführt. Mittels des Ultraschallschweißens kann eine besonders gute und prozesssicher herstellbare Verbindung zwischen dem die Oxidschicht aufweisenden ersten Fügepartner und der Schweißeinlage, insbesondere der ebenfalls einem Stahlwerkstoff aufweisenden Schweißeinlage, erfolgen.

Eine weitere Ausführungsform des Verfahrens wird gemäß Anspruch 7 durchgeführt. Vorteilhaft kann mittels des Widerstandspunktschweißens eine einfach und schnell herstellbare Verbindung zwischen den Fügepartnern erzielt werden. Insbesondere weist die so erzielbare dauerhafte Verbindung ein vorteilhaftes duktiles Versagen auf.

Eine weitere Ausführungsform des Verfahrens wird gemäß Anspruch 8 durchgeführt. Vorteilhaft kann die Schweißeinlage einen zum Durchführen des Widerstandsschweißens erforderlichen Stromfluss konzentrieren. Vorteilhaft kann so die gewünschte lokale Aufschmelzung der Schweißeinlage und/oder des zweiten Fügepartners gezielt erfolgen.

Eine weitere Ausführungsform des Verfahrens wird gemäß Anspruch 9 durchgeführt. Vorteilhaft kann mittels der scheibenförmigen Schweißeinlage eine gute Fügefläche zu Verfügung gestellt werden.

Die Aufgabe ist außerdem durch eine dauerhafte Verbindung eines ersten Fügepartners mit einem zweiten Fügepartner gemäß Anspruch 10 gelöst. Die dauerhafte Verbindung ist durch ein vorab beschriebenes Verfahren hergestellt. Es ergeben sich die vorab beschriebenen Vorteile.

Weitere Vorteile, Merkmale und Einzelheiten der Erfindung ergeben sich aus der nachfolgenden Beschreibung, in der mit Bezug auf die Zeichnung Ausführungsbeispiele im Einzelnen beschrieben sind. Gleiche, ähnliche und/oder funktionsgleiche Teile sind mit gleichen Bezugszeichen versehen. Es zeigen:
- Fig. 1 bis 4: unterschiedliche Schritte eines Verfahrens zum Fügen eines ersten Fügepartners mit einem zweiten Fügepartner;
- Fig. 5: einen Makroschliff einer dauerhaften und mittels des in den Fig. 1 bis 4 dargestellten Verfahrens hergestellten Verbindung zwischen dem ersten Fügepartner und der zweiten Fügepartner;
- Fig. 6: Draufsichten auf unterschiedliche Schweißeinlagen;
- Fig. 7: Seitenansichten unterschiedlicher Schweißeinlagen, insbesondere der in Fig. 6 gezeigten Schweißeinlagen.

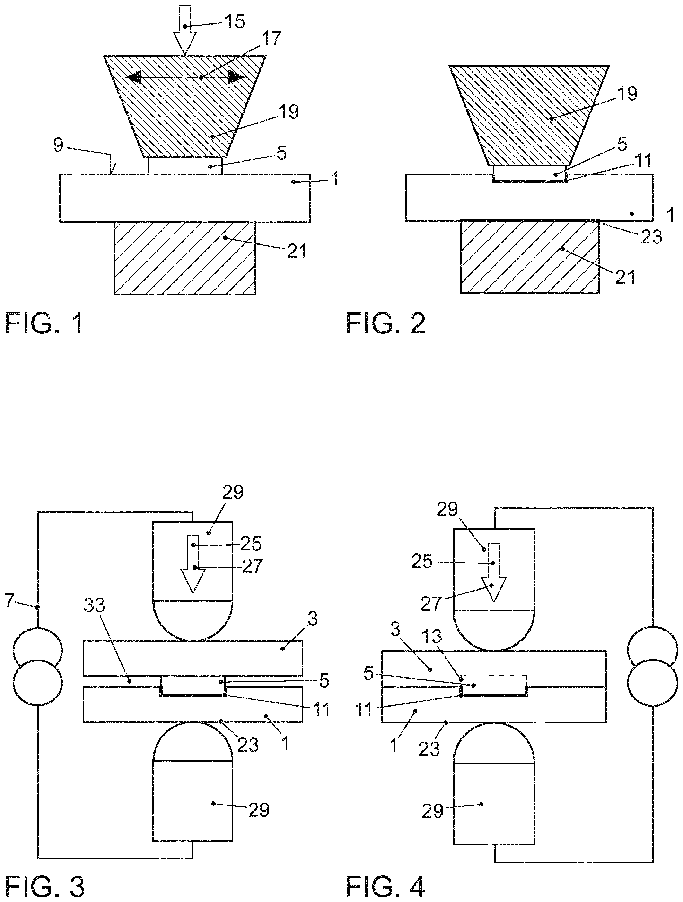

Die Fig. 1 bis 4 zeigen unterschiedliche Schritte eines Verfahrens zum Fügen eines ersten Fügepartners 1 mit einem zweiten Fügepartner 3.

In den Fig. 1 und 2 ist zunächst ein Fügen einer Schweißeinlage 5 mit dem ersten Fügepartner 1 mittels eines Reibschweißens, vorliegenden eines Ultraschallschweißens gezeigt.

Wie in Fig. 1 verdeutlicht, wird mittels einer Sonotrode 19 ein Sonotrodenweg 17 und eine Sonotrodenkraft 15 in die Schweißeinlage 5 eingeleitet. Die Schweißeinlage 5 wird dadurch mittels des Ultraschallschweißens mit dem ersten Fügepartner 1 dauerhaft verbunden.

Der erste Fügepartner 1 weist insbesondere eine Oxidschicht 9 auf, die mittels des Ultraschallschweißens vorteilhaft durchbrechbar ist.

Wie in Fig. 2 zu erkennen, entsteht aufgrund des Ultraschallschweißens eine erste Teilverbindung 11 zwischen der Schweißeinlage 5 und dem ersten Fügepartner 1. Insbesondere ist dazu die Schweißeinlage 5 zumindest teilweise in den ersten Fügepartner 1 eingebettet.

Zum Übertragen der Sonotrodenkraft 15 und/oder des Sonotrodenwegs 17 mittels der Sonotrode 19 wird der erste Fügepartner 1 mittels eines Ambosses 21 abgestützt. Zum Positionieren des Ambosses 21 relativ zu dem ersten Fügepartner 1 weist dieser insbesondere eine Markierung 23 auf. Alternativ oder zusätzlich kann die Markierung 23 mittels des Ultraschallschweißens, insbesondere mittels des Ambosses 21 in den ersten Fügepartner 1 eingebracht werden.

In den Fig. 3 und 4 ist ein Widerstandsschweißen der Schweißeinlage 5 mit dem zweiten Fügepartner 3, insbesondere ein Widerstandspunkteschweißen, dargestellt.

Mittels Schweißelektroden 29 wird eine Elektrodenkraft 25 und ein Elektrodenweg 27 auf die Fügepartner 1 und 3 übertragen. Außerdem wird mittels der Schweißelektroden 29 ein elektrischer Stromfluss 7 durch die Fügepartner 1 und 3 sowie die Schweißeinlage 5 geleitet.

Wie in Fig. 4 zu erkennen, entsteht dadurch eine in Fig. 4 gestrichelt dargestellte zweite Teilverbindung 13 zwischen der Schweißeinlage 5 und dem zweiten Fügepartner 3.

Gemäß Fig. 4 ist zu erkennen, dass der erste Fügepartner 1 mit dem zweiten Fügepartner 3 mittels einer die erste Teilverbindung 11 und die zweite Teilverbindung 13 aufweisenden Verbindung dauerhaft verbunden ist.

In Fig. 3 ist zu erkennen, dass vor dem Einleiten der Elektrodenkraft 25, dem Elektrodenweg 27 sowie dem elektrischen Stromfluss 7 zwischen den Fügepartnern 1 und 3 ein Klebespalt 33 verbleibt. Gemäß eines Aspekts der Erfindung wird der Klebespalt 33 vor dem Einleiten der Elektrodenkraft 25 sowie dem Elektrodenweg 27 mit einem Klebstoff versehen, sodass die Fügepartner 1 und 3 zusätzlich zu der Schweißverbindung über eine Klebeverbindung mittels des in dem Klebespalts 33 befindlichen Klebstoffes verbunden sind.

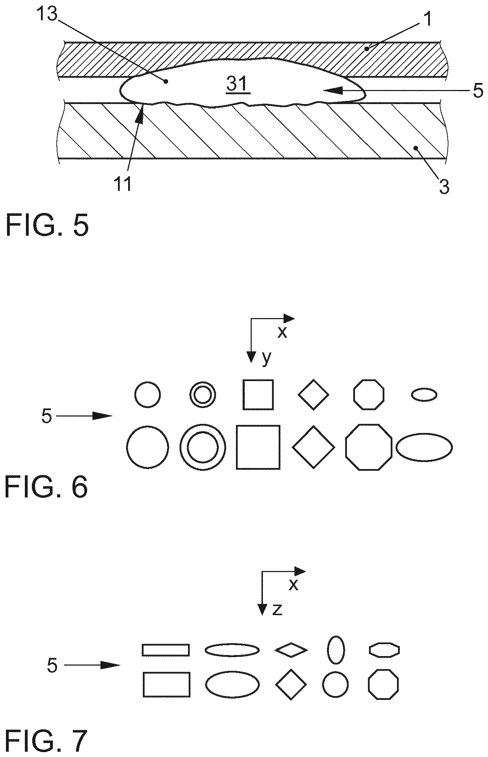

Fig. 5 zeigt einen Makroschliff der in Fig. 4 gezeigten Schweißverbindung zwischen den Fügepartnern 1 und 3. Es ist zu erkennen, dass sich zwischen der Schweißeinlage 5 und dem zweiten Fügepartner 3 eine Schweißlinse 31 der zweiten Teilverbindung 13 gebildet hat. Vorteilhaft können die Elektrodenkraft 25, der Elektrodenweg 27 sowie der elektrische Stromfluss 7 so bemessen sein, dass der zweite Fügepartner 3 sowie die Schweißeinlage 5 zum Bilden der Schweißlinse 31 bereichsweise aufgeschmolzen werden.

Fig. 6 zeigt Draufsichten auf unterschiedliche geometrische Formen von unterschiedlichen Schweißeinlagen 5. Bevorzugt ist die Schweißeinlage 5 scheibenförmig ausgebildet, was in einer linken Darstellung der Fig. 6 zu erkennen ist. Insbesondere ist die Schweißeinlage 5 kreisscheibenförmig mit ausgebildet. Insbesondere ringscheibenförmig, insbesondere rechteckscheibenförmig, insbesondere quadratscheibenförmig, insbesondere achteckscheibenförmig, insbesondere ovalscheibenförmig.

Fig. 7 zeigt mögliche Seitenansichten weiterer Schweißeinlagen 5, insbesondere der in Fig. 6 gezeigten Schweißeinlagen 5.

In einer linken Darstellung der Fig. 7 ist die bevorzugte scheibenförmige Schweißeinlage 5 in der Seitenansicht dargestellt. Insbesondere ist die Seitenansicht der Schweißeinlage 5 ovalförmig, kreisförmig, achteckförmig, viereckförmig.

Vorteilhaft kann der elektrische Stromfluss 7 derartig bemessen sein, dass lediglich die Schweißeinlage 5 und der zweite Fügepartner 3 aufgeschmolzen werden, nicht jedoch der erste Fügepartner 1.

Insbesondere weist der erste Fügepartner 1 einen Aluminiumwerkstoff und der zweite Fügepartner 3 einen Stahlwerkstoff auf. Insbesondere weist auch die Schweißeinlage 5 einen Stahlwerkstoff auf, der hinsichtlich des Widerstandsschweißens, insbesondere des Widerstandspunktschweißens an den Stahlwerkstoff des zweiten Fügepartners 3 angepasst ist.

Insbesondere wird die Schweißeinlage 5 in einer vorgegebenen und/oder vorgebaren Höhe in den ersten Fügepartner 1 mittels des Reibschweißens, insbesondere des Ultraschallschweißens eingebettet. Vorteilhaft kann dadurch eine verbleibende Resthöhe der Schweißeinlage 5 eingestellt werden, die insbesondere vorteilhaft als ein Stromkonzentrator für den elektrischen Stromfluss 7 wirken kann, insbesondere eine Art Schweißbuckel für ein Schweißbuckelschweißen darstellt. Vorteilhaft kann die Höhe der Schweißeinlage 5 so gewählt sein, dass ein bereichsweises Aufschmelzen, insbesondere die Schweißlinse 31 den ersten Fügepartner 1 nicht erreicht.

Außerdem kann vorteilhaft der Klebespalt 33 eingestellt werden, der insbesondere mit dem Klebstoff zum Herstellen der zusätzlichen Klebverbindung versehbar ist.

Vorteilhaft wird die Verbindung zwischen dem ersten Fügepartner 1 und dem zweiten Fügepartner 3 in zwei Stufen, nämlich zunächst mittels des Reibschweißens und dann des Widerstandsschweißens hergestellt. Vorteilhaft ist die Schweißeinlage 5 hoch schmelzend, so dass vorteilhaft eine hohe Prozesssicherheit hinsichtlich Tolleranzen des elektrischen Stromflusses 7 der Elektrodenkraft 25 und/oder des Elektrodenweges 7 gegeben ist.

Vorteilhaft kann die Schweißeinlage 5 als vergleichsweise in günstig herstellbares Stahlteil, insbesondere als ein sogenannter Abkantstahl ausgeführt sein.

Vorteilhaft können durch die vergleichsweise hohen Temperaturen Beschichtungen auf den ersten Fügepartner 1 und/oder dem zweiten Fügepartner 3 verdrängt und/oder zerstört werden, insbesondere kann eine vorab aufgebrachte Klebeschicht auf zumindest einen der Fügepartner 1 und/oder 3 durchbrochen und/oder zerstört werden. Insbesondere kann eine Oxidschicht des ersten Fügepartners 1 mittels des Reibschweißens insbesondere Ultraschallschweißens durchbrochen und/oder zerstört werden.

Vorteilhaft beträgt die Einbetttiefe der Schweißeinlage 5 den ersten Fügepartner 1 zumindest 0,1 mm, insbesondere 0,2 mm bis 0,4 mm. Vorteilhaft kann über die Einbetttiefe das nachfolgende Widerstandsschweißen, insbesondere Widerstandspunktschweißen beeinflusst werden, insbesondere eine Verbindungsfestigkeit.

Vorteilhaft muss die Schweißeinlage 5 hinsichtlich des Widerstandsschweißens, insbesondere Widerstandspunktschweißens auf beide Werkstoffe abgestimmt sein.

Vorteilhaft weist die Schweißeinlage 5 eine derartig große Höhe auf, dass sich die Schweißlinse 31 bilden kann. Vorteilhaft weist diese Verbindung eine hohe Festigkeit und eine Duktilität der Verbindung, insbesondere ein duktiles Versagen der zweiten Teilverbindung 13 auf.

Vorteilhaft kann die Schweißeinlage 5 in weiten Bereichen chemisch und/oder geometrisch an die Fügepartner 1 und 3, insbesondere an dem zweiten Fügepartner 3 angepasst werden, insbesondere mittels des Widerstandspunktschweißens verschweißbar sein.

Vorteilhaft kann mittels des Einbettens der Schweißeinlage 5 und/oder mittels einer Einprägung des Ambosses 21 die vorteilhafte Markierung 23 in den ersten Fügepartnern 1 eingebracht werden. Vorteilhaft kann dadurch die eine Fügestelle für das anschließende Widerstandsschweißen, insbesondere Widerstandspunktschweißen besser aufgefunden werden.

Das Ultraschallschweißen der Schweißeinlage 5 mit dem ersten Fügepartner 1 wird insbesondere bei einer Amplitude von 20 bis 35 µm und einer Anpresskraft von 2000 N, insbesondere 1800 bis 2200 N und einer Einbetttiefe von, insbesondere 0,1 bis 0,5 mm durchgeführt. Insbesondere weist die Schweißeinlage 5 eine kreisscheibenförmige Gestalt auf mit einer Höhe von 1,0 mm bis 1,8 mm sowie einem Durchmesser von 4 mm bis 8 mm.

Bei einer derartigen Dimensionierung der Schweißeinlage 5 beträgt eine Stromzeit des elektronischen Stromflusses 7 zwischen 200 und 600 ms, insbesondere zwischen 50 und 800 ms. Ein Schweißstrom des elektrischen Stromflusses 7 beträgt zwischen 7 und 14 zwischen 9, insbesondere zwischen 9 und 12 kA. Die Elektrodenkraft 25 beträgt insbesondere 4 kN, insbesondere zwischen 2 und 8 kN, insbesondere zwischen 3 und 7 kN, insbesondere zwischen 3,5 und 6 kN.

Zum Herstellen der zweiten Teilverbindung 13 wird insbesondere die Schweißeinlage 5 und der zweite Fügepartner 3 zum Bilden der Schweißlinse 31 aufgeschmolzen.

Insbesondere weist der zweite Fügepartner 3 eine AlSi-Schicht auf, die vorteilhaft mittels des elektrischen Widerstandsschweißens, insbesondere Widerstandspunktschweißens durchdrungen werden kann. Insbesondere weist der erste Fügepartner 1 eine Al-Oxidschicht auf, die vorteilhaft mittels des Reibschweißens, insbesondere Ultraschallschweißens durchbrochen werden kann.

Insbesondere beträgt die Höhe der Schweißanlage 5 0,2 bis 2 mm. Insbesondere kann die Schweißanlage 5 vollständig in den ersten Fügepartner 1 eingebettet werden, bevorzugt zwischen 0 mm und 2 mm. Insbesondere beträgt die Amplitude des Sonotrodenweges 17 28 µm. Insbesondere beträgt die Sonotrodenkraft 15 2,3 kN, insbesondere ungefähr 4 kN.

Vorteilhaft kann eine Verbindung der Fügepartner 1 und 3 auch dann hergestellt werden, wenn der erste Fügepartner 1 einen Aluminiumwerkstoff und der zweite Fügepartner 3 einen Stahlwerkstoff aufweist. Insbesondere weist der erste Fügepartner 1 einen Aluminiumwerkstoff, einem Titanwerkstoff und/oder einen Magnesiumwerkstoff auf, der mittels des Reibschweißens, insbesondere des Ultraschallschweißens mit der Schweißeinlage 5 dauerhaft verbindbar ist.

#Vorteilhaft kann neben dem Widerstandsschweißen auch noch das Verkleben der Fügepartner 1 und 3 erfolgen. Vorteilhaft kann mittelst der Einbetttiefe der Schweißeinlage 5 die Höhe des Klebespalts 33 eingestellt werden. Vorteilhaft kann die Schweißeinlage 5 eine auf einem der Fügepartner 1 und 3 vorab aufgebrachte Klebeschicht verdrängen und einen Schweißpunkt, insbesondere Schweißlinse 31 bilden. Vorteilhaft ist die Schweißeinlage 5 hoch schmelzend, insbesondere derartig hoch schmelzend, dass deren Schmelztemperatur über entsprechenden Schmelztemperaturen der Fügepartner 1 und 3 liegt, insbesondere um gegebenenfalls die Klebstoffschicht lokal und gewollt zu verbrennen.

Vorteilhaft ist die Schweißeinlage 5 als günstiges Blechteil, insbesondere als Blechzuschnitt und/oder als Normteil herstellbar.

Vorteilhaft werden die Fügepartner 1 und 3 mittels eines kombinierten Schweißprozesses dauerhaft miteinander verbunden, wobei die Schweißeinlage 5 an entsprechende Werkstoffe der Fügepartner 1 und 3 anpassbar ist, wobei vorteilhaft keine vorhergehende Aktivierung und/oder Benutzung und/oder Schichtentfernung von etwaigen auf den Fügepartnern 1 und 3 vorhandenen Schichten erforderlich ist, wobei vorteilhaft mittels des Ultraschallschweißens und/oder den hohen Temperaturen des Widerstandsschweißens ein entsprechendes Durchdringen, Durchbrechen und/oder Verbrennen entsprechender Schichten erfolgen kann. Vorteilhaft ergibt sich ein reproduzierbarer und robuster Verbindungsvorgang, ausgelöst durch höhere Temperaturen. Eine aufwendige Schichtapplikation von Fügehilfsmitteln ist nicht notwendig. Vielmehr genügt das einfache Vorsehen der Schweißeinlage 5 zum Herstellen der dauerhaften Verbindung zwischen den Fügepartnern 1 und 3.

Der zweite Fügepartner 3 weist insbesondere einen hochfesten Stahl 22MnB5 + AS auf, wobei der erste Fügepartner 1 einen Aluminiumwerkstoff und/oder Magnesiumwerkstoff aufweist. Vorteilhaft kann so eine Mischverbindung mittels der Schweißeinlage 5 hergestellt werden. Vorteilhaft können so Leichtbauteile, insbesondere für einen Automobilbau mittels einer Kombination unterschiedlichster Werkstoffe hergestellt werden. Vorteilhaft können mittels des Ultraschallschweißens intermetallische Phasen vermieden oder zumindest auf ein Minimum reduziert werden. Vorteilhaft können bei dem Ultraschallschweißen derart geringe Fügetemperaturen verwendet werden, so dass weder die Schweißeinlage 5 noch der erste Fügepartner 1 eine Soliduslinie übersteigen. Vorteilhaft kann der zweite Fügepartner 3 trotz einer vergleichsweise rauen Oberfläche und/oder einer mittels Presshärten erzeugten stabilen Schicht an einer Oberfläche mittels des Widerstandsschweißens gefügt werden. Vorteilhaft bietet die Schweißeinlage 5 einen dazu geeigneten Fügepartner, die insbesondere artähnlich zu dem zweiten Fügepartner 3 ist. Die Schweißeinlage 5 weist als eine Schweißeignung gegenüber dem ersten Fügepartner 1, insbesondere dem Aluminiumbasiswerkstoff und dem Stahlwerkstoff des zweiten Fügepartners 3, insbesondere dem Stahlwerkstoff 22MnB5 + AS auf.

Der Sonotrodenweg 17 setzt sich aus einer Amplitude.und einem Nachsetzweg der Sonotrode zusammen. Im Anschluss kann, was in den Fig. 3 und 4 dargestellt ist, auf bekannte Art und Weise eine FeAlSi-Schicht, die gegebenenfalls auf dem zweiten Fügepartner 3 vorhanden ist, durchbrochen werden, wodurch die feste zweite Teilverbindung 13, die in Fig. 4 gestrichelt dargestellt ist, insbesondere der Schweißlinse 31 hergestellt werden kann. Vorteilhaft kann ein entsprechender Widerstandspunktschweißprozess mit einer herkömmlichen Anlagetechnik realisiert werden.

Die Schweißeinlage 5 kann mittels des Ultraschallschweißens, insbesondere punktförmig, nahtförmig und/oder torsional mit dem ersten Fügepartner 1, insbesondere dem Aluminiumwerkstoff des ersten Fügepartners 1 verbunden werden. Das Ultraschallschweißen mit dem ersten Fügepartner 1 dient dabei als sogenannter Hilfsfügeprozess für den anschließenden Widerstandspunktschweißprozess. Vorteilhaft können durch das Aufbringen der Schweißeinlage 5 eine ggf. vorhandene Oxidschicht 9 auf dem ersten Fügepartner 1 durchbrochen und/oder zerstört werden. Verbindungsmechanismen zwischen der Schweißeinlage 5 und dem ersten Fügepartner 1 beruhen insbesondere auf ein anpassen und annähern der Fügeflächen, Diffusionsvorgängen und/oder einem Wirksamwerden von atomaren Bindungskräften (ADB).

Vorteilhaft kann anschließend als Hauptfügeprozess ein konventionelles Widerstandsschweißen, insbesondere Widerstandspunktschweißen genutzt werden. Alternativ oder zusätzlich sind andere thermische Schweißprozesse denkbar, die zum bilden der Schweißlinse 31 führen, die in Fig. 5 als Makroschliff dargestellt ist.

Insbesondere kann die Verbindung zwischen dem ersten Fügepartner 1 und dem zweiten Fügepartner 3 als Mischverbindung einer Aluminiumlegierung, insbesondere EN AW-5754, AW-6016 und einem Stahlwerkstoff, insbesondere 22MnB5 durchgeführt werden. Insbesondere kann zusätzlich ein Kleben, ein sogenanntes Punktschweißkleben der Fügepartner 1 und 3 erfolgen. Insbesondere können die Fügepartner 1 und 3 unterschiedliche Grundmaterialien und/oder unterschiedliche Halbzeuge insbesondere Blech - Blech, Blech - Bolzen, Blech - Profil und/oder ähnliche aufweisen.

Eine Zuführung der Schweißeinlage 5 kann entsprechend bekannten Prozessen erfolgen, insbesondere mittels einer Transferfolie und oder einem Transferband und/oder einem Luftschlauch und/oder einem Magazin und/oder einer Transportschiene und/oder ähnlichem.

Die Schweißeinlage 5 ermöglicht eine Beeinflussung von metallurgischen Zuständen der Fügepartner 1 und 3 mittels der Schweißprozesse.

Das zweistufige Schweißverfahren kann insbesondere als Fixierverfahren für das Kleben entlang des Klebespaltes 33 genutzt werden. Das Kleben und das Schweißverfahren können einander ergänzen.

Vorteilhaft entstehen und wirken keine kritischen metallischen Phasen an der ersten Teilverbindung 11 und oder der zweiten Teilverbindung 13. Vorteilhaft ist eine Festigkeit der Teilverbindungen 11 und 13 der Verbindung zwischen den Fügepartnern 1 und 3 vergleichsweise hoch und weist insbesondere ein duktiles vorteilhaften Versagen auf. Insbesondere ist kein Aufbau eines Zusatzelementes vorhanden, insbesondere aufgrund der Einbettung der Schweißeinlage 5 und der anschließenden Bildung der Schweißlinse 31 aufgrund des Aufschmelzens der Schweißeinlage 5.

Insbesondere ist eine Kennzeichnung der Fügestellung mittels der Markierung 23 möglich. Insbesondere kann über eine in den Fig. 6 und 7 dargestellte Größe und/oder Form der Schweißeinlage 5 eine Festigkeit der Schweißverbindung eingestellt und/oder vorgegeben werden. Insbesondere können auch Prozessparameter wie der elektrische Stromfluss 7, die Sonotrodenkraft 15, der Sonotrodenweg 17, die Elektrodenkraft 25 sowie der Elektrodenweg 27 mittels der Ausgestaltung der Schweißeinlage 5 beeinflusst und/oder eingestellt werden. Die Schweißeinlage 5 ist für den ersten Fügepartner 1, insbesondere den Aluminiumwerkstoff Ultraschall schweißgeeignet und für den zweiten Fügepartner 3, insbesondere einen gehärteten Stahlwerkstoff mit einer Beschichtung Widerstandspunkt schweißgeeignet.

Eine Form und eine Geometrie der Schweißeinlage 5 ist variabel, insbesondere bevorzugt ein den Fügepartnern 1 und 3 angepasstes Schweiß und/oder Klebeprozess begünstigendes, Schweiß und/oder Klebe geeignetes Eigenschaften bestimmendes Material, insbesondere ein einfacher Stahl für gehärtete Bleche und/oder Aluminium für Aluminium. Bevorzugt weist die Schweißeinlage 5 eine scheibenförmige Gestalt auf, die in den Fig. 6 und 7 jeweils links dargestellt ist. Vorteilhaft ist diese Gestalt einfach herstellbar, insbesondere als Normteil erhältlich.

Vorteilhaft können Fügepartner mit unterschiedlicher Oberfläche, wie Rauhigkeit, Oberflächenbeschichtung, Gefügezustand, wie kaltumgeformt, kaltverfestigt, Härte gefügt werden, wobei die Aufnahmefähigkeit für die Sonotrode verbessert wird.

### Bezugszeichenliste

- 1: Fügepartner
- 3: Fügepartner
- 5: Schweißeinlage
- 7: Stromfluss
- 9: Oxidschicht
- 11: Teilverbindung
- 13: Teilverbindung
- 15: Sonotrodenkraft
- 17: Sonotrodenweg
- 19: Sonotrode
- 21: Amboss
- 23: Markierung
- 25: Elektrodenkraft
- 27: Elektrodenweg
- 29: Schweißelektrode
- 31: Schweißlinse
- 33: Klebespalt

## Patentansprüche

1. Verfahren zum Fügen eines ersten Fügepartners (1) mit einem zweiten Fügepartner (3) mittels eines elektrischen Widerstandsschweißens, mit:
- Fügen einer Schweißeinlage (5) mit dem ersten Fügepartner (1) mittels eines Reibschweißens,
- Erzeugen eines elektrischen Stromflusses (7) über den zweiten Fügepartner (3) in die Schweißeinlage (5) und dadurch
- Fügen der Schweißeinlage (5) mit dem zweiten Fügepartner (3) mittels des elektrischen Widerstandsschweißens.

2. Verfahren nach dem vorhergehenden Anspruch, wobei der erste Fügepartner (1) eine Oxidschicht (9) aufweist, mit:
- Durchbrechen und schadlos machen der Oxidschicht (9) des ersten Fügepartners (1) mittels des Reibschweißens.

3. Verfahren nach einem der vorhergehenden Ansprüche, wobei die Fügepartner (1, 3) unterschiedliche Werkstoffe aufweisen.

4. Verfahren nach einem der vorhergehenden Ansprüche, wobei der erste Fügepartner (1) einen Werkstoff ausgewählt aus:
- einem Aluminiumwerkstoff,
- einem Magnesiumwerkstoff,
- einem Titanwerkstoff,
- einem Kupferwerkstoff
aufweist.

5. Verfahren nach einem der vorhergehenden Ansprüche, wobei der zweite Fügepartner (3) einen Metallwerkstoff, insbesondere Stahlwerkstoff aufweist, mit dem die Schweißeinlage (5) mittels des elektrischen Widerstandsschweißens verschweißbar ist.

6. Verfahren nach einem der vorhergehenden Ansprüche, mit:
- Durchführen des Reibschweißens als ein Ultraschallschweißen.

7. Verfahren nach einem der vorhergehenden Ansprüche, mit:
- Durchführen des Widerstandsschweißens als ein Widerstandspunktschweißen.

8. Verfahren nach einem der vorhergehenden Ansprüche, mit:
- Durchführen des Widerstandsschweißens als ein Widerstandsbuckelschweißen, wobei die Schweißeinlage (5) einen Schweißbuckel bildet.

9. Verfahren nach einem der vorhergehenden Ansprüche, wobei die Schweißeinlage (5) scheibenförmig ist.

10. Dauerhafte Verbindung eines ersten Fügepartners (1) mit einem zweiten Fügepartner (3), mit:
- einem ersten Fügepartner (1), einem zweiten Fügepartner (3) und einer Schweißeinlage (5),
- einer mittels eines Reibschweißens hergestellten ersten Teilverbindung (11) zwischen der Schweißeinlage (5) und dem ersten Fügepartner (1),
- einer mittels eines Widerstandsschweißens hergestellten zweiten Teilverbindung (13) zwischen der Schweißeinlage (5) und dem zweiten Fügepartner (3), hergestellt nach einem Verfahren nach einem der vorhergehenden Ansprüche.

## Claims

1. Method for joining a first joining partner (1) to a second joining partner (3) by means of electric resistance welding, comprising:
- joining of a welding insert (5) to the first joining partner (1) by means of friction welding,
- generating of an electric current flow (7) via the second joining partner (3) into the welding insert (5), and, as a result,
- joining of the welding insert (5) to the second joining partner (3) by means of the electric resistance welding.

2. Method according to the preceding claim, the first joining partner (1) having an oxide layer (9), comprising:
- breaching and rendering harmless of the oxide layer (9) of the first joining partner (1) by means of the friction welding.

3. Method according to either of the preceding claims, the joining partners (1, 3) comprising different materials.

4. Method according to one of the preceding claims, the first joining partner (1) comprising a material selected from:
- an aluminium material,
- a magnesium material,
- a titanium material,
- a copper material.

5. Method according to one of the preceding claims, the second joining partner (3) comprising a metal material, in particular steel material, to which the welding insert (5) can be welded by means of the electric resistance welding.

6. Method according to one of the preceding claims, comprising:
- carrying out of the friction welding as ultrasonic welding.

7. Method according to one of the preceding claims, comprising:
- carrying out of the resistance welding as resistance spot welding.

8. Method according to one of the preceding claims, comprising:
- carrying out of the resistance welding as resistance projection welding, the welding insert (5) forming a welding projection.

9. Method according to one of the preceding claims, the welding insert (5) being disc-shaped.

10. Permanent connection of a first joining partner (1) to a second joining partner (3), comprising:
- a first joining partner (1), a second joining partner (3) and a welding insert (5),
- a first part connection (11) which is produced by means of friction welding between the welding insert (5) and the first joining partner (1),
- a second part connection (13) which is produced by means of resistance welding between the welding insert (5) and the second joining partner (3),
produced in accordance with a method according to one of the preceding claims.

## Revendications

1. Procédé pour l'assemblage d'un premier partenaire d'assemblage (1) avec un second partenaire d'assemblage (3) au moyen d'un soudage électrique par résistance, avec
- assembler un insert de soudage (5) au premier partenaire d'assemblage (1) au moyen d'un soudage par friction,
- produire un courant électrique (7) via le second partenaire d'assemblage (3) dans l'insert de soudage (5) et ainsi
- assembler l'insert de soudage (5) au second partenaire d'assemblage (3) au moyen du soudage électrique par résistance.

2. Procédé selon la revendication précédente, dans lequel le premier partenaire d'assemblage (1) présente une couche d'oxyde (9), avec l'opération suivante:
- rompre et neutraliser la couche d'oxyde (9) du premier partenaire d'assemblage (1) au moyen du soudage par friction.

3. Procédé selon l'une quelconque des revendications précédentes, dans lequel les partenaires d'assemblage (1, 3) présentent des matériaux différents.

4. Procédé selon l'une quelconque des revendications précédentes, dans lequel le premier partenaire d'assemblage (1) présente un matériau choisi parmi:
- un matériau d'aluminium,
- un matériau de magnésium,
- un matériau de titane,
- un matériau de cuivre.

5. Procédé selon l'une quelconque des revendications précédentes, dans lequel le second partenaire d'assemblage (3) présente un matériau métallique, en particulier un matériau d'acier, auquel l'insert de soudage (5) peut être soudé au moyen du soudage électrique par résistance.

6. Procédé selon l'une quelconque des revendications précédentes, dans lequel on exécute le soudage par friction sous forme de soudage par ultrasons.

7. Procédé selon l'une quelconque des revendications précédentes, dans lequel on exécute le soudage par résistance sous la forme d'un soudage par résistance par points.

8. Procédé selon l'une quelconque des revendications précédentes, dans lequel on exécute le soudage par résistance sous la forme d'un soudage par bossages de résistance, dans lequel l'insert de soudage (5) forme un bossage de soudage.

9. Procédé selon l'une quelconque des revendications précédentes, dans lequel l'insert de soudage (5) est en forme de disque.

10. Assemblage durable d'un premier partenaire de soudage (1) à un second partenaire de soudage (3), avec
- un premier partenaire de soudage (1), un second partenaire de soudage (3) et un insert de soudage (5),
- un premier assemblage partiel (11) réalisé au moyen d'un soudage par friction entre l'insert de soudage (5) et le premier partenaire de soudage (1),
- un second assemblage partiel (13) réalisé au moyen d'un soudage par résistance entre l'insert de soudage (5) et le second partenaire de soudage (3),
fabriqué par un procédé selon l'une quelconque des revendications précédentes.
